# EUROPEAN PATENT APPLICATION

(11) **EP 4 269 363 A1**
(43) Date of publication of application: **01.11.2023**
(21) Application number: 22169790.7
(22) Date of filing: 25.04.2022
(51) Int. Cl.: C02F 1/32, A61L 2/10

(54) **A WATER PURIFIER**

(71) Applicant: Watersprint AB, 223 63 Lund (SE)
(72) Inventor: Uvnäs, Krister, 247 35 Södra Sandby (SE); Lindqvist, Mathias, 227 31 Lund (SE); Kokkola, Linda, 223 52 Lund (SE); Rasmussen, Peter, 2610 Rödovre (DK); Ekholm, Sebastian, 268 77 Kågeröd (SE); Ulfsson Sparre, Erik, 212 50 Malmö (SE); Skoglund, Michael, 241 74 Stehag (SE)
(74) Representative: AWA Sweden AB

(57) **Abstract**

The present invention relates to a water purifier (100, 200, 300, 400). The water purifier (100, 200, 300, 400) comprising: a housing (110) delimiting a volume (120), the housing (110) comprising a top surface (112) and a sidewall (114), the housing (110) having an inlet (130) that is connectable to a freshwater conduit and an outlet (140), wherein the outlet (140) is arranged at a distance (D2) from the top surface (112), such that a dead-space (122) is formed at an upper portion of the housing (110), the dead-space (122) being defined by the top surface (112) and an upper portion of the sidewall (114); and an UV light source (152) arranged at the upper portion of the housing (110) and being configured to emit UV light into the volume (120).

## Description

### Technical field

The present invention relates to the field of water purification. More specifically, it is related to a water purifier.

### Background of the invention

Decontamination by means of ultra violet (UV) light is a well-established and reliable technique for use in systems for purifying fluids, in particular systems suitable for providing potable water. These systems are efficient and perform satisfactory without the use of any chemicals. UV light in fluid purification systems has the purpose of destroying the metabolic activity, mainly the DNA of bacteria, or other microorganisms being present in the water, in order to decontaminate the fluid.

Typically, raw water is treated in a water supply plant whereafter this treated, refined water, frequently referred to as tap water, is made available to the end users via a water distribution system. In countries with rigorous water quality regulation, the term tap water is interchangeable with the term potable water. Elsewhere, tap water should undergo further treatment prior to being consumed. In both described cases, the tap water remains susceptible to contamination, in particular to biological infection. There have been examples when large communities and towns have had their water being infected even though their tap water on normal basis would be potable water.

As is evident from above, water purifiers utilizing UV light can be used to avoid such situations. However, the UV light sources need to be protected from the water in some way. This is typically done by having a glass pane, or any other transparent material, between the UV light source and the water for shielding off the UV light source. However, there is a problem that residues from the water collects on the glass pane. If the glass pane is not kept clean, the effectiveness of the UV light source may be reduced as a result. Thus, there is room for improvement of water purifiers utilizing UV light.

### Summary of the invention

The inventors of the present inventive concept have realized, since there is a problem of the glass plane protecting the UV light source, or the UV light source itself, being covered in dirt or other deposits from the water, that an air gap between the UV light source and the water may be utilized in order to solve this problem. Thus, a high effectiveness of the UV light source can be maintained.

According to a first aspect of the present inventive concept, a water purifier is provided. The water purifier comprises a housing delimiting a volume, the housing comprising a top surface and a sidewall, the housing having an inlet that is connectable to a freshwater conduit and an outlet, wherein the outlet is arranged at a distance, D2, from the top surface, such that a dead-space is formed at an upper portion of the housing, the dead-space being defined by the top surface and an upper portion of the side wall; and an UV light source arranged at the upper portion of the housing and being configured to emit UV light into the volume.

Relative spatial terms such as "top", "bottom", "side", "upper", "lower", "downwards", "below" and "above" are used to refer to locations or directions within a frame of reference of the water purifier. In particular, "top", "bottom", "upper", "lower", "downwards", "below" and "above" may be understood in relation to a bottom-up direction of the water purifier, i.e. a direction from a bottom surface of the housing to the top surface of the housing. The bottom-up direction may be a normal direction to a plane ground, or equivalently, a direction opposite to gravity. Correspondingly, "side" may be understood as locations or orientations in relation to / along the plane ground. Preferably, the water purifier is arranged with the bottom up direction opposite to gravity. However, it should be noted that the water purifier may be arranged at different angles as well. The relative spatial terms mentioned above should mainly be seen as a way of defining locations of elements of the water purifier in relation to each other.

It should be noted that directions denoted by wordings such as "top", "bottom", "upper", "lower", "downwards", "below" and "above" may refer to directions having a component in the bottom-up, or top-down direction respectively. Put differently, the directions may not be limited to directions parallel to the bottom-up or top-down direction.

The freshwater conduit is to be interpreted as a source of tap water or potable water, such as a water distribution system.

The wording "dead-space" is to be interpreted as an empty space in the upper portion of the housing in which no water is present. This may be achieved by the fact that the outlet of the housing is arranged at the distance, D2, from the top surface, and which is greater than zero. Thus, a level of water in the housing may be prevented from reaching the UV light source at the upper portion of the housing. Even if the water is pressurized, and might rise to a level above the outlet, an airgap between the water and the top surface may still be present. The dead-space may house a volume of air or another gas during the use of the water purifier.

A possible associated advantage of the present inventive concept is that the dead-space, which is present between the water and the UV light source, may ensure that the water never comes in contact with the UV light source. Thus, the UV light source, or a protective material layer of the UV light source, may be protected from being covered in residue, such as dirt, present in the water, as well as from other deposits which may form on the surface of the UV light source, such as calcium deposits. This, in turn, prevents a deterioration of the decontamination effect that the UV light has, which otherwise would have been caused. Thus, a high level of cleaning of the water may be maintained. Further, the maintenance of the water purifier can be reduced, since it may require less cleaning.

The UV light source may be arranged at the top surface of the housing. This may be advantageous in that the UV light emitted by the UV light source can be directed directly towards the water to be decontaminated.

The UV light source may be arranged at the upper portion of the side wall. In other words, the UV light source may be arranged at a portion of the sidewall at the dead-space.

The inlet may be arranged at a first distance, D1, from the top surface and the distance, D2, between the outlet and the top surface, may be a second distance, D2, wherein the second distance, D2, may be shorter than the first distance, D1.

The second distance, D2, may be between 1 and 10 % of the first distance, D1, or more preferably between 3 and 5 % of the first distance, D1. The second distance, D2, may be 2mm or more. The second distance, D2, may be 5mm or more. The second distance, D2, may be dependent on a cross-sectional area of the housing.

This provides for a compact water purifier which still has a dead-space sufficiently large to avoid water from coming in contact with the UV light source, while the rest of the housing is still large enough for housing the water during a decontamination process.

The UV light source may comprise one or more UV-LEDs.

The outlet may be arranged in the side wall of the housing.

The outlet may be tube-shaped and angled obliquely downwards from the housing, wherein the outlet may have an open end exposed to ambient air.

This may be advantageous in that the water may flow out of the housing by itself, without requiring a pumping unit or such.

The water purifier may further comprise a splash-blocker comprising one or more openings, arranged below the UV light source and configured to let the UV light pass through the one or more openings and at the same time prevent water splash from reaching the UV light source.

A possible associated advantage is that the water purifier may be made more compact. A reason of which may be that the distance, D2, between the outlet and the top surface, may be reduced, since the splash-blocker itself reduces the risk of water splashing up on the UV light source.

The water purifier may form part of a fluidly closed system, and wherein the water purifier may further comprise an gas inlet connected to the upper portion of the housing.

By the wording "fluidly closed system" it is herein meant that both the inlet and the outlet of the housing is connected to a closed water system. Hence, neither the inlet nor the outlet is exposed to ambient air. In such case, the gas inlet may be arranged to regulate the amount of gas present in the housing. As an example of a fluidly closed system, the water purifier may be an integral part of a water treatment plant. The gas inlet may be configured as an air inlet. Alternatively, another gas, such as nitrogen or oxygen, may be let in through the gas inlet.

A height to width ratio of the housing may be 5:1 or more. Such height to width ratio may be advantageous in that it reduces turbulence in the water.

The outlet may be tube-shaped and wherein an inside of the tube-shaped outlet may comprise a plurality of UV light blockers configured to block UV light and at the same time let water through.

The UV light blockers may be interpreted as physical members blocking the way of the UV light.

This may be advantageous in that UV light is prevented from escaping the housing, where it could possibly cause damage. This may be particularly advantageous in the case where the outlet has an open end exposed to ambient air, e.g. a water tap, so that the UV light does not expose a human using the tap.

The water purifier may further comprise a heating element arranged at the upper portion of the housing and configured to heat the same. The heating element may be arranged at the top surface of the housing and be configured to heat the same..

A possible associated advantage is that condensation on the top surface may be removed, which otherwise could reduce the effect of the UV light source.

The water purifier may further comprise a carbon filter arranged at the inlet. The carbon filter may further improve the purification capability of the water purifier.

The inlet may be arranged at a bottom surface of the housing. This may be advantageous in that it allows the water to be treated by the UV light from the UV light source over a time period it takes for the water to rise through the housing from the inlet to the outlet.

The water purifier may further comprise a control valve configured to regulate an amount of water entering the housing through the inlet.

A possible associated advantage is that the amount of water entering the housing may be coordinated with the amount of water exiting the housing through the outlet in order to avoid filling the dead-space with water.

The water purifier may form part of a water tap, wherein the outlet may be a mouthpiece of the water tap.

A water sub-volume may be formed at a lower portion of the housing, the water sub-volume may be defined by the bottom surface of the housing and a lower portion of the side wall, wherein the lower portion of the side wall being below the upper portion of the side wall. The sub-volume may house a volume of water during use of the water purifier.

According to a second aspect, a system for purifying water is provided. The system comprises the water purifier according to the first aspect. The system may comprise one or more additional purifying units for improving different quality aspects of the water. The system may be a water supply plant or a water treatment plant.

The above-mentioned features of the first aspect, when applicable, apply to this second aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a device" or "the device" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 schematically illustrates, by way of a first example, a water purifier.
Figure 2 schematically illustrates, by way of a second example, a water purifier.
Figure 3 schematically illustrates, by way of a third example, a water purifier.
Figure 4 schematically illustrates, by way of a fourth example, a water purifier.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person. Further, the sizes and shapes of the different elements in the figures are merely examples for illustrative purposes and should thus not be seen as limiting.

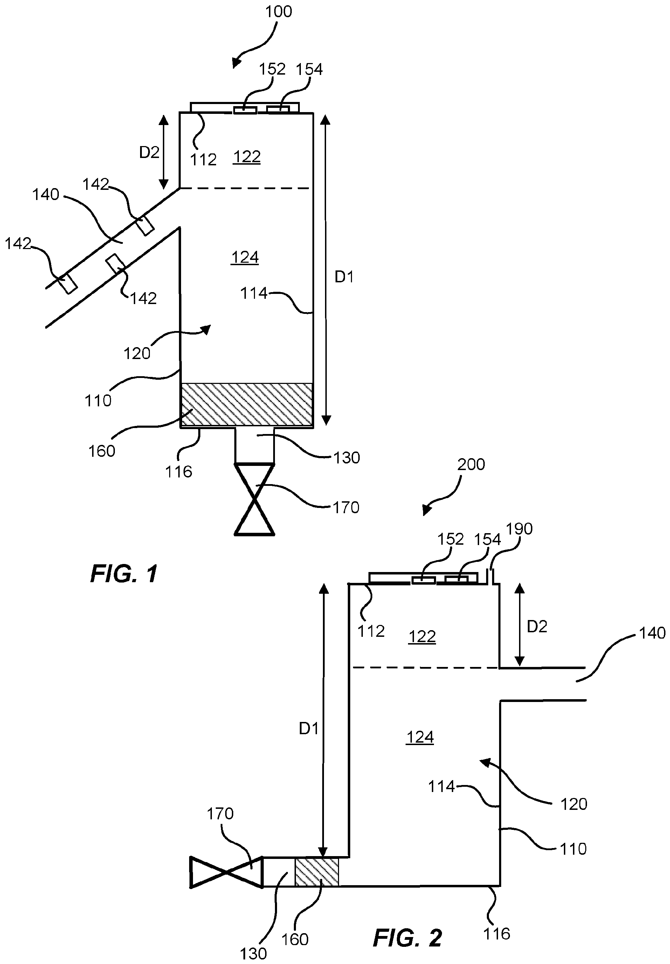

A water purifier will now be described with reference to Fig. 1 to Fig. 4. Fig. 1 to Fig. 4 illustrates different examples of the water purifier according to the present inventive concept. For illustrative purposes, different features and elements may be shown in different figures. However, it should be noted that a feature and/or element disclosed in one example, may be applicable to the other examples as well.

Figure 1 illustrates a first example of the water purifier 100 in a cross-sectional view. The water purifier 100 comprises a housing 110. The housing 110 delimits a volume 120. The housing 110 may be cylindrical. Preferably, the housing 110 is circularly or oval cylindrical. However, any kind of cylindrical shape may be possible. For example, the housing 110 may have a polygonal cross section. The housing 110 comprises a top surface 112. The top surface 112 may be defined by a top-most portion of the housing 110. The top surface 112 need not to be a flat surface. The housing 110 further comprises a sidewall 114. As indicated above, the sidewall 114 may be cylindrical walls. However, the sidewall 114 may have other shapes as well. The housing 110 may further comprise a bottom surface 116. The bottom surface 116 may be defined by a lower-most portion of the housing 110. The bottom surface 116 need not to be a flat surface. The sidewall 114 may connect the top surface 112 and the bottom surface 116. A ratio between a height of the housing 110 (i.e. from the top surface 112 to the bottom surface 116) and a width of the housing 110 may be 5:1 or more. Even though the housing 110 is illustrated as having a rectangular cross section, the housing 110 may take other shapes as well.

The sidewall 114 may have a tapered shape as seen from the bottom surface 116 towards the top surface 112. For example, the side wall may have a conical shape. By having a decreasing cross-sectional area of the housing going upwards, movement of the water in the housing may be reduced.

The housing 110 further comprises an inlet 130. The inlet may be connected to a freshwater conduit. The freshwater conduit may for instance be a water distribution system supplying water to an end user, for instance a household or business. The inlet 130 may be arranged at a first distance D1, from the top surface 112 of the housing 110. Herein, the first distance D1 refer to a distance along a bottom-up direction of the water purifier 100. The inlet 130 may be arranged in the bottom surface 116 of the housing 110, as illustrated herein. However, the inlet 130 may also be arranged in the side wall 114, as will become apparent from the description in connection with Fig. 2 below.

The housing 110 further comprises an outlet 140. It should be noted that the water purifier 100 may comprise two or more outlets, even though the water purifier 100 illustrated herein comprises only one outlet 140. The outlet 140 may be arranged in the sidewall 114 of the housing 110. The outlet 140 is arranged at a distance D2 from the top surface 112 of the housing 110, also referred to as a second distance D2. More specifically, a top portion of the outlet 140 may be arranged at the second distance D2 from the top surface 112 of the housing 110. Herein, the second distance D2 refers to a distance along the same direction as the first distance D1.

The second distance D2 may be shorter than the first distance D1. In other words, the inlet 130 may be provided below the outlet 140. The second distance D2 may be between 1 and 10 % of the first distance D1. More preferably, the second distance D2 may be 3 to 5 % of the first distance D1. The second distance D2 may be 5mm or more. In another example, the second distance D2 may be 50mm or more. In another example, the second distance may be 100mm or more.

The second distance D2 may be dependent on a flow rate at which water enters the water purifier 100. For example, the second distance D2 may be larger for higher flow rates, and smaller for lower flow rates. In particular, the second distance D2 may be selected based on the highest possible flow rate which water may be supplied to the water purifier 100.

A dead-space 122 may be formed at an upper portion of the housing 110. The dead-space 122 may be defined by the top surface 112 and an upper portion of the sidewall 114. The dead space 122 may be a result of the outlet being arranged at the second distance D2 from the top surface 112 of the housing 110.

A water sub-volume 124 may be formed at a lower portion of the housing 110. The water sub-volume 124 may be defined by the bottom surface 116 of the housing 110 and a lower portion of the sidewall 116. The lower portion of the sidewall 114 may be below the upper portion of the sidewall 114. Together, the dead-space 122 and the water sub-volume may constitute the volume 120 of the housing 110.

A boundary line between the dead-space 122 and the water sub-volume 124 is illustrated by a broken line across the housing 110. The dead-space 122 may be the volume between the top surface 112 and the top portion of the outlet 140, i.e. at the second distance D2 from the top surface 112. The water sub-volume 124 may be the volume from the top portion of the outlet 140 down to the bottom surface 116 of the housing 110. During use of the water purifier 100, the dead-space 122 may be housing air. During use of the water purifier 100, the water sub-volume 124 may house water. The dead-space 122 may serve as an air gap between the UV light source 152 and the water in the housing 110 that is to be decontaminated. The dead-space 122 may be partly filled with water. For example, if the water purifier 100 is pressurized, a water level in the housing 110 may rise above the outlet 140. This may be the case if there is resistance in outflow through the outlet 140. However, the second distance D2 may be such that at least a part of the dead-space 122 is still free from water to form the air gap between the water level and the UV light source 152.

The water purifier 100 further comprises an UV light source 152. The UV light source 152 may be arranged at the upper portion of the housing 110. In other words, the UV light source 152 may be arranged in the dead-space 122. More specifically, the UV light source 152 may be arranged at the top surface 112 of the housing 110, as illustrated herein. Alternatively, the UV light source 152 may be arranged at the upper portion of the sidewall 114. Put differently, the UV light source 152 may be arranged at the sidewall 114 in the dead-space 122. In case the UV light source 152 is arranged at the sidewall 114, a reflector (not shown) may be provided in the housing 110. The reflector may be arranged to direct the UV light from the UV light source 152 towards the water in the housing 110.

The second distance D2 may alternatively be defined from the outlet 140 to the UV light source 152. In other words, the outlet 140 may be arranged at the second distance D2 from the UV light source 152.

The UV light source 152 may comprise one or more UV-LEDs. The one or more UV-LEDs may be distributed over the top surface 112 of the housing. The UV light source 152 may be configured to emit UV light into the volume 120. The UV light emitted by the UV light source is configured to decontaminate the water present in the volume 120. The UV light source 152 may be any LED-based UV light source used in water purifiers. The UV light source 152 may further comprise one or more light reflectors and/or one or more lenses to control a direction of the UV light.

Having the dead-space 122 between the water and the UV light source 152 may be further advantageous in that the water surface may be used as a reflective surface in order to monitor the emitted UV light. In particular, the water purifier 100 may further comprise one or more UV light sensors (not shown) arranged in the upper portion of the housing 110. For example, the one or more UV light sensors may be arranged at the top surface 112 of the housing 110. The one or more UV light sensors may be configured to measure properties of the UV light reflected on the water surface. The measured properties may for example be an intensity and/or spectrum of the reflected UV light. Measuring properties of the UV light may be advantageous in that a quality of the UV light may be monitored. By monitoring the UV light emitted by the UV light source 152, one may determine e.g. if the UV light source 152 is deteriorating, if there are any malfunctions of the UV light source, or just to confirm that the UV light source is working as is should.

Using the water surface as the reflecting surface may be advantageous in that it may have consistent reflective properties. For example, the water surface does not get covered in residue as e.g. a mirror in contact with the water would.

The water purifier 100 may further comprise a water level sensor (not shown). The water level sensor may be configured to measure a water level in the housing 110. The measured water level may be used in monitoring the UV light emitted from the UV light source 152 in that it may provide information about a distance from the water surface (i.e. the reflective surface) to the UV light source and/or to the one or more UV light sensors.

In order to accurately determine the properties of the UV light from the reflection against the water surface, movement of the water surface may need to be taken into account. For example, if there is turbulence in the water, the reflective surface that is the water surface may not be still, and therefore affect how the UV light is reflected. The inventors has realized a number of ways for handling such effects.

In one example, the UV light source 152 may be evaluated (i.e. the properties of the UV light determined) at a point where there is no inflow or outflow of water from the water purifier 100. In other words, the UV light source 152 may be evaluated while the water surface is still.

In another example, the properties of the UV light may be evaluated as averaged values over time. Averaging the measured properties over time may reduce the effect of a moving water surface.

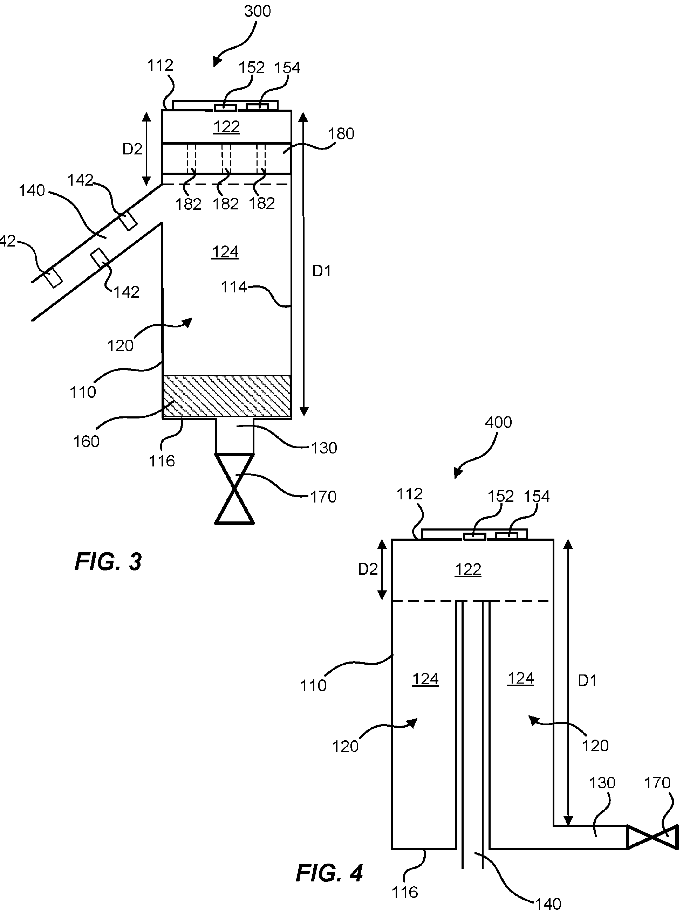

In yet another example, the water surface may be stabilized e.g. by use of splash-blockers, as will be further described below in connection with Fig. 3.

In yet another example, a plurality of UV light sensors may be used to measure the properties of the UV light. The measured values of the properties may then be averaged over the different UV light sensors. Thus, the effects of the moving water surface may be reduced.

It should be noted that any combination of the examples described above may also be possible.

The water purifier 100 may be self-regulating when it comes to the water level in the housing 110. However, the water purifier 100 may further comprise a control valve 170. The control valve 170 may be arranged at the inlet 130. The control valve 170 may be configured to regulate an amount of water entering the housing 110 through the inlet 130. The control valve 170 may control the amount of water entering the housing 110, based on a rate of which water is exiting the housing 110 through the outlet 140, such that a water level in the housing 110 does not reach above the water sub-volume 124, or at least not up to the UV light source 152. Alternatively, or in combination, the control valve 170 may control the amount of water entering the housing 110, based on a contamination level of the water, such that the water is present in the housing for enough time to be exposed to an amount of UV light required to decontaminate the water. The contamination level of the water may be measured by one or more sensor units (not shown). The one or more sensor units may be provided at the inlet 130 of the housing. Alternatively, or in combination, the sensor units may be provided in the housing.

The water purifier 100 may further comprise a pump unit (not shown) for pressurizing the inflow of water. The pumping unit may thus control how much water enters the housing 110 such that the water level in the housing 110 does not reach the upper portion of the housing 110, or more specifically the UV light source 152.

The water purifier 100 may further comprise a carbon filter 160. The carbon filter 160 may be arranged at the inlet 130 of the housing 110. The carbon filter may be configured to remove impurities and contaminants in the water. The carbon filter 160 may be provided below the UV light source 152 such that the UV light source 152 may illuminate the carbon filter 160 to decontaminate the carbon filter 160. In the illustrated example of Fig. 1, the carbon filter 160 is provided at a bottom of the housing 110. However, other placements of the carbon filter is possible as well, for instance as illustrated in Fig. 2.

The water purifier 100 may further comprise a heating element 154. The heating element 154 may be arranged at the upper portion of the housing 110. The heating element 154 may be arranged at the top surface 112 of the housing 110. The heating element 154 may be arranged to heat the upper portion of the housing 110 to remove any condensation which may be formed thereon. The heating element 154 may be arranged to heat the top surface 112 of the housing 110 to remove any condensation which may be formed thereon. This may be the case if the UV light source 152 is arranged at the top surface 112. The heating element 154 may be arranged to heat the upper portion of the sidewall 114 to remove any condensation which may be formed thereon. This may be the case if the UV light source 152 is arranged at the upper portion of the side wall 114. Specifically, the heating element 154 may remove condensation from the UV light source 152 or a protective glass in front of the UV light source 152, such that the effect of the UV light source 152 is not reduced due to the condensation. In other words, the heating element 154 may be arranged to heat any surface which is to be kept clean from residues, so that also no condensation is formed thereon. The heating element 154 may further prevent condensation from forming on other parts of the water purifier as well, such as any electrical components, optical sensors etc. arranged at the dead-space 122.

The outlet 140 may be tube-shaped. The outlet 140 may be angled obliquely downwards from the housing 110 as illustrated herein. This may allow the water to flow out from the water purifier by gravity when a water level in the housing 110 reaches a height of the outlet 140. The outlet 140 may have an open end exposed to ambient air. In other words, the outlet 140 of the water purifier 100 may lead out of the water purifier 100. The water purifier 100 may for instance form part of a water tap. The outlet 140 may then be a mouthpiece of the water tap. An inside of the outlet 140 may be provided with a plurality of UV light blockers 142. The UV light blockers 142 may be configured to block UV light from getting out of the housing 110 through the outlet 140. At the same time, the UV light blockers 142 may be configured to let the water pass through. The UV light blockers 142 may be made of any suitable material which do not let UV light to pass through. Preferably, the UV light blockers 142 are made of an opaque material or transparent materials with a coating that absorbs or reflects the UV light. As illustrated herein in the present example, the UV light blockers 142 may be three barriers partly blocking the outlet. The barriers may be provided at alternating sides of the outlet 140 as illustrated herein in order to block light passing through, while still allowing water to pass. However, it should be noted that the configuration of the UV light blockers 142 illustrated herein is to be seen as a non-limiting example. Any number of UV light blockers 142 may be provided. Further, the UV light blockers 142 are not limited to the shape and dimensions of the exemplifying illustration of Fig. 1.

Figure 2 illustrates a second example of the water purifier 200 in a cross-sectional view. As apparent from the illustrations of Fig. 1 and Fig. 2, the water purifier 200 of Fig. 2 shares many of the features with the water purifier of Fig. 1. In order to avoid undue repetition, reference is made to the above.

As illustrated in Fig. 2, the inlet 130 of the water purifier 200 may be provided at the sidewall 114 of the housing 110. In the present example, the inlet 130 is provided at a lower most part of the sidewall 114. However, the inlet 130 may be provided at any part of the sidewall 114 where the first distance D1 from the top surface 112 of the housing 110 to the inlet 130 is larger than the second distance D2 from the top surface 112 to the outlet 140.

In the presence of a carbon filter in the water purifier 200, the carbon filter 160 may be arranged in the inlet 130 of the water purifier 200. This may be an alternative to having the carbon filter 160 in the housing 110 as illustrated in Fig. 1. In another example, the carbon filter 160 may be provided in a separate module (not shown) of the water purifier 200.

The outlet 140 of the water purifier 200 is arranged at the second distance D2 from the top surface 112 of the housing. As opposed to the outlet 140 of the water purifier 100 of Fig. 1, the outlet 140 of the water purifier 200 of Fig. 2 may be connected to a closed system. More specifically, the water purifier 200 may form part of a fluidly closed system. In other words, the outlet 140 may not be connected directly to ambient air. As an example, the water purifier may form an integral part of a larger water treatment system. As another example, the water purifier 200 may be provided at a water inlet of a household, or upstream from a water source, such as before a water tap or shower.

In another example, the water purifier may be incorporated in a water treatment plant. In this example, the housing may be without a bottom surface to form an open bottom of the housing. The open bottom of the housing may constitute the inlet and outlet of the water purifier by allowing water to rise up and down in the housing. The water purifier may be arranged above an open water container housing water to be decontaminated. The water purifier may be arranged such that a lower portion of the housing may be submerged in the water of the water container. The water purifier may be arranged such that the UV light source of the water purifier is at a third distance, D3, from a highest possible water level of the water container. Thus, a distance of at least the third distance, D3, may always be maintained between the UV light source and the water in the water container. Thus, the UV light source may emit UV light into the water container without coming in contact with the water. Having a lower part of the housing submerged in the water may ensure that no UV light can exit the housing or water container. The water purifier may be arranged above an inlet or outlet of the water container so that the UV light source can decontaminate all water passing through the water container.

The water purifier 200 may further comprise a gas inlet 190. The gas inlet 190 may be connected to the upper portion of the housing 110. The gas inlet 190 may be connected to the top surface 112 of the housing. Alternatively, the gas inlet 190 may be connected to the upper portion of the sidewall 114. In other words, the gas inlet 190 may be arranged such that water cannot exit the housing 110 through the gas inlet 190. The gas inlet 190 may be configured to allow air, or any other gas, to enter and/or exit the dead space 122. Hence, the gas inlet 190 may be configured to adjust the gas pressure in the housing 110 as the water level in the housing 110 changes. Any excess gas may exit the water purifier 100 through the outlet 140, together with the water.

The gas inlet 190 may be arranged upstream from the water purifier. In such case, the gas may be mixed into the water entering the water purifier 100. When the water enters the housing 110, the gas may separate from the water and form a gas pocket in the dead-space 122.

The gas inlet 190 may be arranged at the water sub-volume 124 for mixing the gas into the water in the housing 110.

Alternatively, or in combination with the gas inlet 190, gas already present in the water may be extracted from the water by lowering a pressure in the housing 110.

Fig. 3 illustrates a third example of the water purifier 300. In addition to what is shown in Fig. 1, the water purifier 300 shown in Fig. 3 comprises a splash-blocker 180. The splash-blocker 180 may be an element arranged below the UV light source 152. The splash-blocker 180 illustrated herein comprises three openings 182. However, the splash-blocker 180 may comprise one or more openings 182. The openings 182 may be configured to let UV light pass through. At the same time, the openings 182 may be configured to prevent water splash from reaching the UV light source 152. The splash blocker may in other words reduce movement in the surface of the water. Thus, a calmer water surface may be achieved. This may further improve distribution of the UV light in the water purifier 100, since an unstable water surface may lead to different refraction of the UV light which may affect the distribution of the UV light within the housing 110.

The openings 182 of the splash-blocker 180 may have straight walls as herein illustrated. Alternatively, the openings 182 may have tapered walls. For example, a top portion (i.e. closest to the UV light source 152) of the openings 182 may have a smaller cross-sectional area than a bottom portion of the openings 182. This may further improve the reduction of water splash or turbulence in the water.

The splash-blocker 180 may be arranged anywhere in the housing 110. For example, the splash-blocker 180 may be arranged in the dead-space 122 as illustrated herein. The splash-blocker 180 may span over the entire dead-space 122. Alternatively, the splash-blocker 180 may span over a part of the dead-space 122, as illustrated herein. The splash-blocker 180 may span over the dead-space 122 and the water sub-volume 124. For example, the splash-blocker 180 may be arranged at a topmost water level at the boundary line between the dead-space 122 and the water sub-volume 124.

In another example, the splash-blocker 180 may comprise one or more dividers arranged in the housing 110. The one or more dividers may be vertical walls arranged in the housing 110. The one or more dividers may be arranged such that turbulence in the water housed in the housing 110 is reduced, and thus also reduces the risk of water splashing on the UV light source.

The splash-blocker 180 may be covered in a reflective material such that a spread of the UV light emitted from the UV light source 152 is improved. In particular, inner walls of the openings 182 may be covered in the reflective material to increase the amount of UV light passing through the splash-blocker 180.

Fig. 4 illustrates a fourth example of the water purifier 400. In addition to what is already shown and described in connection with Fig. 1 to Fig. 3, the water purifier 400 illustrates another example of the outlet 140 of the water purifier 400. As illustrated herein, the outlet 140 may be provided from the bottom surface 116 of the housing 110. The outlet 140 may comprise an elongated portion extending through the housing, such that the water when it reaches a distance of the second distance D2 from the top surface 112 it may enter the outlet 140 for flowing out of the housing 110.

Additionally, variations to the disclosed variants can be understood and effected by the skilled person in practicing the claimed invention, from a study of the drawings, the disclosure, and the appended claims.

## Claims

1. A water purifier (100, 200, 300, 400) comprising:
a housing (110) delimiting a volume (120), the housing (110) comprising a top surface (112) and a sidewall (114), the housing (110) having an inlet (130) that is connectable to a freshwater conduit and an outlet (140), wherein the outlet (140) is arranged at a distance (D2) from the top surface (112), such that a dead-space (122) is formed at an upper portion of the housing (110), the dead-space (122) being defined by the top surface (112) and an upper portion of the sidewall (114); and
an UV light source (152) arranged at the upper portion of the housing (110) and being configured to emit UV light into the volume (120).

2. The water purifier (100, 200, 300, 400) according to claim 1, wherein the UV light source (152) is arranged at the top surface (112) of the housing (110).

3. The water purifier (100, 200, 300, 400) according to claim 1 or 2, wherein the inlet (130) is arranged at a first distance (D1) from the top surface (112) and the distance (D2) between the outlet (140) and the top surface (112) is a second distance (D2), wherein the second distance (D2) is shorter than the first distance (D1).

4. The water purifier (100, 200, 300, 400) according to claim 3, wherein the second distance (D2) is between 1 and 10 % of the first distance (D1), or more preferably between 3 and 5 % of the first distance (D1).

5. The water purifier (100, 200, 300, 400) according to any one of claims 1 to 4, wherein the UV light source (152) comprises one or more UV-LEDs.

6. The water purifier (100, 200, 300, 400) according to any one of claims 1-5, wherein the outlet (140) is arranged in the sidewall (114) of the housing.

7. The water purifier (100, 200, 300, 400) according to any one of claim 1 to 6, wherein the outlet (140) is tube-shaped and angled obliquely downwards from the housing (110), wherein the outlet (140) has an open end exposed to ambient air.

8. The water purifier (100, 200, 300, 400) according to any one of claims 1-7, wherein the water purifier (100, 200, 300, 400) further comprises a splash-blocker (180) comprising one or more openings (182), arranged below the UV light source (152) and configured to let the UV light pass through the one or more openings (182) and at the same time prevent water splash from reaching the UV light source (152).

9. The water purifier (100, 200, 300, 400) according to any one of claims 1-8, wherein the water purifier (100, 200, 300, 400) is forming part of a fluidly closed system, and wherein the water purifier (100, 200, 300, 400) further comprises a gas inlet (190) connected to the upper portion of the housing (110).

10. The water purifier (100, 200, 300, 400) according to any one of claims 1-9, wherein a height to width ratio of the housing (110) is 5:1 or more.

11. The water purifier (100, 200, 300, 400) according to any one of claims 1-10, wherein the outlet (140) is tube-shaped and wherein an inside of the tube-shaped outlet comprises a plurality of UV light blockers (142) configured to block UV light and at the same time let water through.

12. The water purifier (100, 200, 300, 400) according to any one of claims 1-11, further comprising a heating element (154) arranged at the upper portion of the housing (110) and configured to heat the same.

13. The water purifier (100, 200, 300, 400) according to any one of claims 1-12, wherein the inlet (130) is arranged at a bottom surface (116) of the housing (110).

14. The water purifier (100, 200, 300, 400) according to any one of claims 1-13, wherein the water purifier (100, 200, 300, 400) is forming part of a water tap, wherein the outlet (140) is a mouthpiece of the water tap.

15. The water purifier (100, 200, 300, 400) according to any one of claims 1-14, wherein a water sub-volume (124) is formed at a lower portion of the housing (110), the water sub-volume (124) being defined by the bottom surface (116) of the housing (110) and a lower portion of the side wall (114), wherein the lower portion of the side wall being below the upper portion of the side wall.
